# EUROPEAN PATENT APPLICATION

(11) **EP 1 515 063 A1**
(43) Date of publication of application: **16.03.2005**
(21) Application number: 04021684.8
(22) Date of filing: 13.09.2004
(51) Int. Cl.: F16D 65/12, F16D 65/847

(54) **Brake disk**

(30) Priority: 15.09.2003 US 667122
(71) Applicant: Braking Italia S.r.l., 20040 Briosco (MI) (IT)
(72) Inventor: Greppi, Bruno, 22036 Erba (CO) (IT)
(74) Representative: Faraggiana, Vittorio, Dr. Ing.

(57) **Abstract**

An brake disk (10) is provided for use in installation on vehicles (12) or transrotary systems for use in conjunction with brake pads (22). The disk (10) includes an obverse side (40) and a reverse side (42) each of which is provided with a series of alternating protruding segments (44) and indented segments (46). The indented segments (46) on one side of the disk (10) are situated axially opposite protruding segments (44) on the other side. Each protruding segment (44) includes a leading edge (52) for engaging the brake pads (22). The particular shapes and relative circumferential widths of the alternating segments vary depending on particular usage.

## Description

The present invention relates generally to vehicular transportation and more particularly to brake systems using brake disk devices.

Any moving vehicle, or any item with transrotary movement, needs some sort of mechanism for absorbing energy, in order to reduce the speed of rotation. One of the most common and most effective methods for braking on vehicles is the disk brake system. This style uses a disk which is coupled to and rotates with the wheel and brake pads which are fixed in position and frictionally engage the sides of the disk when activated. This style of brake mechanism is used on many types of vehicles, but is particularly popular on motorcycles.

The earliest and simplest forms of disk brakes utilize simple flat disks having smooth surfaces and regular shapes. However, as performance requirements became more rigorous various modifications have been introduced. Improvements have been particularly aimed at improving the cooling of the disk material in order to maintain better friction for longer braking periods and to enhance the lifetimes of pads and disks. In addition, modifications have been made to reduce the weight of the disks, particularly for performance cycles, while maintaining high strength and integrity.

Various disk structures have been utilized, including those with ventilation holes in the disk surface and irregular edges. One of the more popular innovations was introduced by the present inventor in 1998 and involves having the disk rim formed in an undulating pattern with the radial width of the disk being less than that of the brake pads, so that only a portion of the pad contacts the disk at a time. Disks of this variety are marketed under the WAVE trademark by Braking Italia and its affiliates.

Significant challenges in braking systems and disk brakes in particular deal with overheating and loss of friction, since the energy absorption associated with braking generates a significant amount of heat energy. Dealing with dissipation and thermal absorption remains a matter for concern and improvement in the industry.

Continuing demand for improved structures persists, so that a need is maintained for disk configurations which provide improved braking characteristics, as well as optimized weight and strength, combined with excellent cooling characteristics.

Accordingly, it is an object of the present invention to provide a new and improved brake disc for vehicles, particularly motorcycles, which provides better heat dissipation characteristics than the prior available versions.

Another object of the invention is to provide a brake disk which increases effective friction to facilitate quicker braking action.

Yet another object of the invention is to provide a brake disk which may be utilized on a variety of vehicles.

A further object of the invention is to provide a brake disk which is adaptable to mounting on a very wide variety of systems and for use with a wide variety of pad structures.

Briefly, one preferred embodiment of the present invention is a brake disk adapted for installation on the hub of a wheel of a vehicle. The preferred brake disk is especially adapted for use on motorcycles and motor-driven cycles. The brake disk is adapted to mate with and be installed on a variety of hubs and wheels and to mate with varying types of conventional brake calipers and pads.

The preferred brake disk has an irregular shape, both radially and laterally, with alternating segments providing varying surfaces to contact (or be separated from) the brake pads. The disk is circumferentially arrayed about a central axis which corresponds with the hub axle when the disk is mounted on a vehicle. The disk also may be considered to have a disk plane which will be perpendicular to the central axis and intersect the disk material.

The disk has an outer rim and an inner rim, with the inner rim including, at variously spaced locations, bolt notches for facilitating attachment to the hub. The disk also has an obverse face (side) and a reverse face with the obverse side facing away from the wheel. The thickness of the disk is such that neither face intersects the disk plane at any point. The preferred disk is effectively laterally symmetrical, at least to the extent that either face may be the obverse or the reverse, depending on how it is mounted on the hub. However, the disk is definitely not locally symmetrical about the disk plane.

Each face of the disk includes alternating segments in the form of protruding segments and indented segments which extend varying axial distances from the disk plane. The protruding segments extend further axially so that they will abut against the brake pads when activated, while the indented segments extend to a lesser degree such that no contact with the brake pads ever occurs (barring excess wear). The protruding segments are circumferentially wider than the indented segments such that a greater portion of the disk contacts the brake pads when the calipers are activated. The various segments are aligned such that the indented segments on the obverse are opposite protruding segments on the reverse side, and the indented segments on the reverse are circumferentially opposite protruding segments on the obverse, so that consistent material strength is maintained throughout.

An advantage of the present invention is that the alternating protruding and indented segments provide for improved heat dissipation and better cooling than continuous surface constructions.

Another advantage of the present invention is that the irregularly shaped protruding segments balance and optimize wear on the brake pads, thus extending the life thereof.

A further advantage of the present invention is that the indented segments provide that portions of the brake pads are not in frictional contact with the brake disk during braking, thus permitting cooling of the pads as well as the disk.

Another advantage of the present invention is that the alternating protruding and indented segments facilitate rapid changes of the specific pressure applied by the pad on the disk, thus providing better initial grip than other disk designs.

Yet another advantage of the invention is that the variegated surface facilitates beading of the brake pad surface during use, thus helping to prevent material crystallization and extending pad life.

Still another advantage of the invention is that there are no holes or apertures extending all the way through the disk, thus minimizing the potential for capturing impediments, such as twigs or other debris which might interfere with the operation of the brake systems.

A still further advantage of the present invention is that the irregular outside rim surface and, to a lesser degree, the irregular inside rim surface, provide a greater surface area and increase heat dissipation into the environment, resulting in improved cooling.

Yet another advantage of the invention is that the indented segments cause the overall disk to be lighter, resulting in material savings in manufacturing and reduction of overall weight on the vehicle in usage.

These and other objects and advantages of the present invention will become clear to those skilled in the art in view of the description of the best presently known modes of carrying out the invention and the industrial applicability of the preferred embodiments as described herein and as illustrated in the several figures of the drawings.

The purposes and advantages of the present invention will be apparent from the following detailed description in conjunction with the appended drawings in which:
Fig. 1 is a side elevational view illustrating a brake disk according to the present invention as installed on the hub of a vehicle;
Fig. 2 is a perspective view of a preferred brake disk, shown standing alone;
Fig. 3 is a front plan view of the disk of Fig. 2;
Fig. 4 is a cross sectional view, taken along line 3-3 of Fig. 3;
Fig. 5 is plan view of a first alternate embodiment of the invention;
Fig. 6 is a plan view of a second alternate embodiment of the invention;
Fig. 7 is a plan view of a third alternate embodiment of the invention; and
Fig. 8 is a front plan view of a fourth alternate embodiment of the invention.

A preferred embodiment of the present invention is a brake disk device adapted for use on a vehicle, particularly with motorcycles, motor driven cycles and bicycles having disk type brakes. A preferred embodiment of the invention is illustrated in the several figures of the drawing and is identified by the general reference character 10.

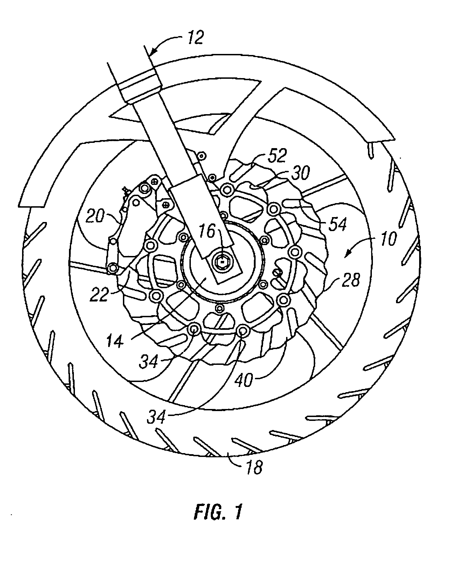

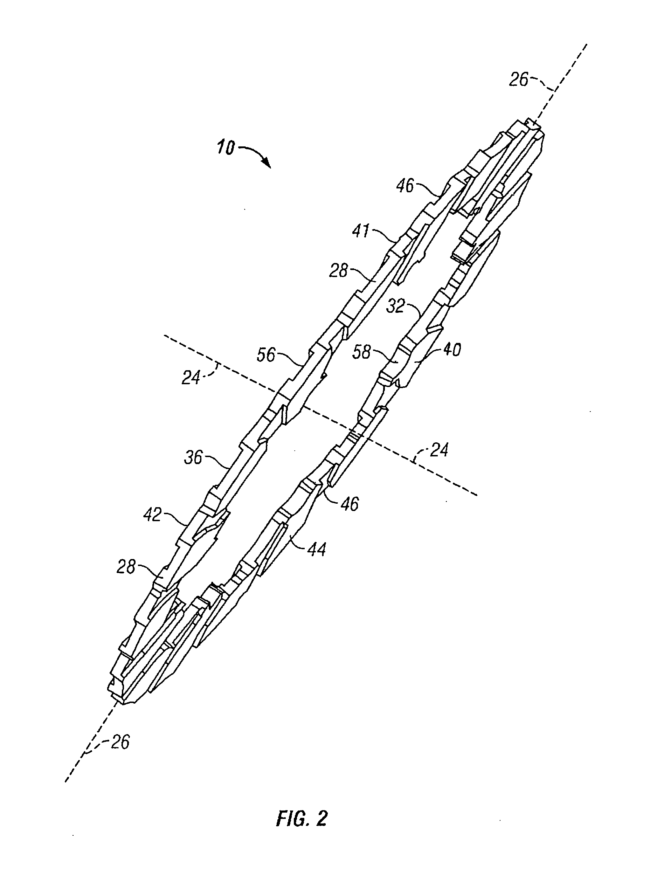

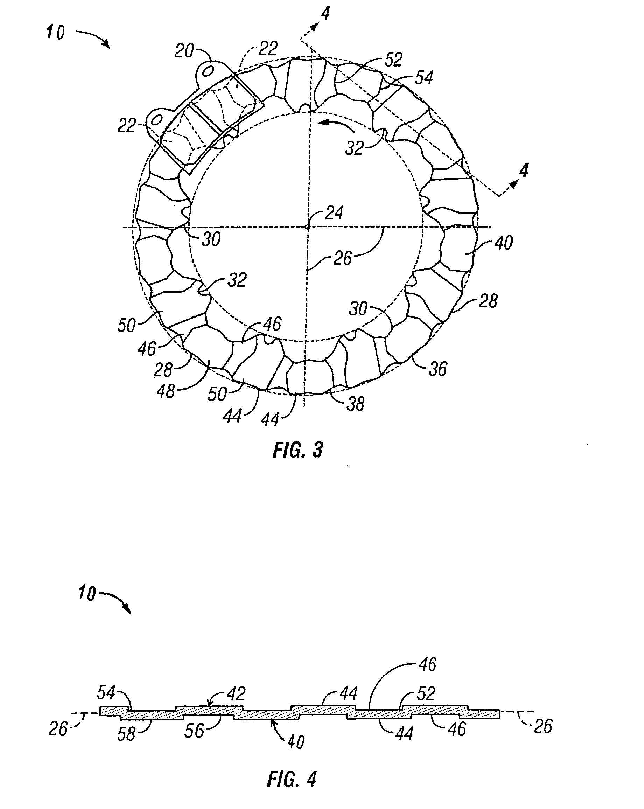

A preferred brake disk 10 is illustrated in Fig. 1 as being installed on a vehicle 12 (partially shown). Other views of the preferred embodiment 10 are illustrated in Figs. 2, 3 and 4 of the drawings, and the present description refers to all of these figures. The vehicle 12 will typically be a motorcycle, although other vehicles and transrotary mechanisms upon which disk brakes are utilized could also benefit from the invention. The perspective view of Fig. 1 shows the disk 10 mounted on a hub 14 of an axle 16 of a wheel 18. The remainder of a conventional disk brake mechanism, including calipers 20 including brake pads 22, is illustrated in conjunction with the inventive disk 10. These mechanisms are more clearly illustrated in Fig. 3. It is understood that the brake mechanism, other than the disk 10, is conventional and does not form a part of the invention.

The disk 10 is arrayed about a central axis 24 (see Figs. 2 and 3) which passes through the axle 16 when installed. Although the disk 10 cannot be said to be radially symmetrical about the central axis 24, it is generally so, with the material of the disk 10 being in the form of a flat ring with a hollow center. The disk itself is arrayed about a disk plane 26 (see Figs. 2 and 4) which perpendicularly intersects the central axis 24 and passes radially through the material of the disk 10.

The disk 10 includes an irregular outer rim 28 and an irregular inner rim 30. The inner rim 30 includes a plurality of bolt notches 32 which receive bolts 34 and facilitate mounting on the hub 14. Both the outer rim 28 and the inner rim 30 have irregular edge surfaces, adapted to increase surface area over regular surfaces. The present embodiment shows alternating curved edge portions 36 and angled edge portions 38. The increased surface area on the rims improves heat dissipation into the environment (air) during and after braking, thus improving cooling and improving the lifetime of both the disk and the brake pad.

The disk 10 may be seen as having an obverse side 40 and a reverse side 42 (see Figs. 2 and 4), opposing each other about the disk plane 26. The designation of obverse and reverse is somewhat arbitrary and is determined by the orientation in which the disk 10 is mounted on the hub 14, at least in the embodiment shown in the first four figures. The obverse side 40 and the reverse side 42 are functionally symmetrical in that the same pattern of shapes appears on each. However, the pattern is rotated a few degrees.

A principle characteristic of the invention is that the surfaces of the disk 10 include alternating protruding segments 44 and indented segments 46. These alternating segment provide a varying degree of engagement with the brake pads 22 and facilitate the effective braking action and cooling properties. The indented segments 46 on one side of the disk surface are always opposite protruding segments 44 on the opposing face, although the converse is not the case.

The present embodiment 10 includes two forms of protruding segments 44. Because of their superficial resemblance to the shape of US states, the two types of segments are referred to herein as "Ohio" segments 48 and "Indiana" segments 50 (see, especially, Fig. 3). The Indiana segments 50 extend further on the inner rim and terminate in the bolt notches 32.

Each protruding segment 44 has a leading edge 52 and a trailing edge 54. These designations refer to the interface with the brake pads 22 (see Figs. 1 and 3) and will vary depending on the direction of travel of the vehicle 12 and the orientation of the disk 10 on the hub 14. The leading edges 52 will provide increased "gripping" with the surface of the brake pad 22 and facilitate quicker deceleration of the vehicle 12. The leading edge 52 and trailing edge 54 portions also provide increased material surface to aid heat dissipation.

The indented segments 46 define the zone intermediate the adjacent trailing edge 54 of one protruding segment and the leading edge 52 of the next protruding segment 44. When the brake pad 22 is situated opposite an indented segment 46 it will not be in physical contact with the disk 10 and will be subject to air cooling and heat dissipation. In the embodiment of Figs. 2 through 4, each indented segment is open at its ends (at the outer rim 28 and the inner rim 30) which facilitates lateral air flow therethrough and aids the cooling process. As shown in the alternate embodiments illustrated in Figs. 1 and 5 through 8, the leading edges 52 and trailing edges 54 are not always aligned so that they are radially aligned with the brake pads 22. It has been found that angles of between 0° and 45° are acceptable for the angle of incidence on such, depending on the type of usage.

The brake pad engaging surfaces of the obverse side 40 and the reverse side 42 are provided with alternating protruding segments 44 and indented segments 46. The indented segments 46 are circumferentially narrower than the protruding segments 44. As is particularly apparent in the cross sectional view of Fig. 4, the pattern of segments is rotated on opposing sides of the disk 10 so that each indented segment 46 is axially opposite a protruding segment 44. This maintains a minimum material thickness at all portions of the disk, including minimal thickness portions 56, so that the strength of the disk material is not compromised by the indentations. It is noted that some portions of the disk have a greater material thickness, at maximum thickness portions 58, where protruding segments 44 on each side of the disk 10 are radially opposite. It is believed that the best results are obtained when the indented segments 46 have a circumferential width of between 10% and 40% of the width of the protruding segments 44. This means that a greater amount of contact than noncontact with the brake pad is always maintained during braking.

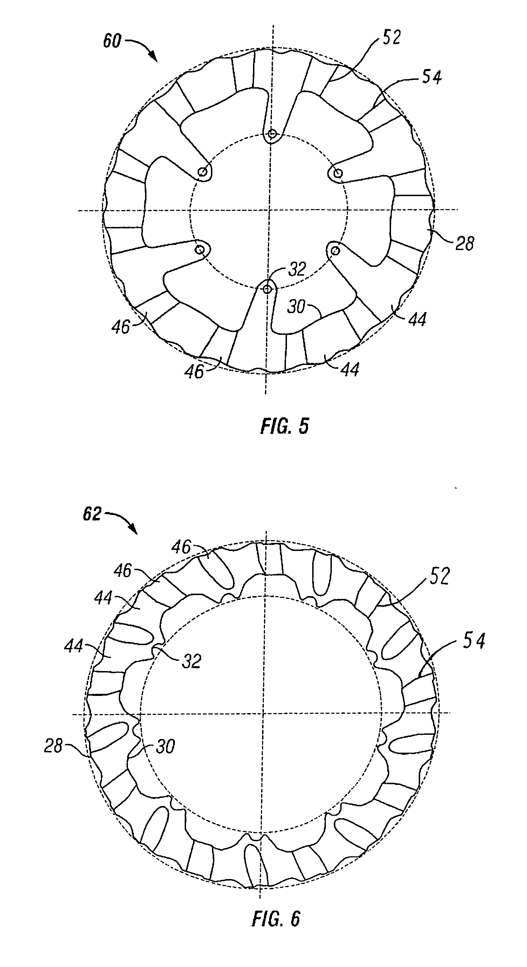

Fig. 5 illustrates a first alternate embodiment of the invention which is designated as 60. This embodiment has protruding segments 44 which are essentially similar to each other and also has leading edges 52 which are essentially radially normal to the brake pads 22 upon incidence. In addition, the bolt notches 32 are replaced by bolt holes for connecting to the hub at a greater distance from the inner rim 30 than in other embodiments. This design is for specialized use on certain types of vehicles.

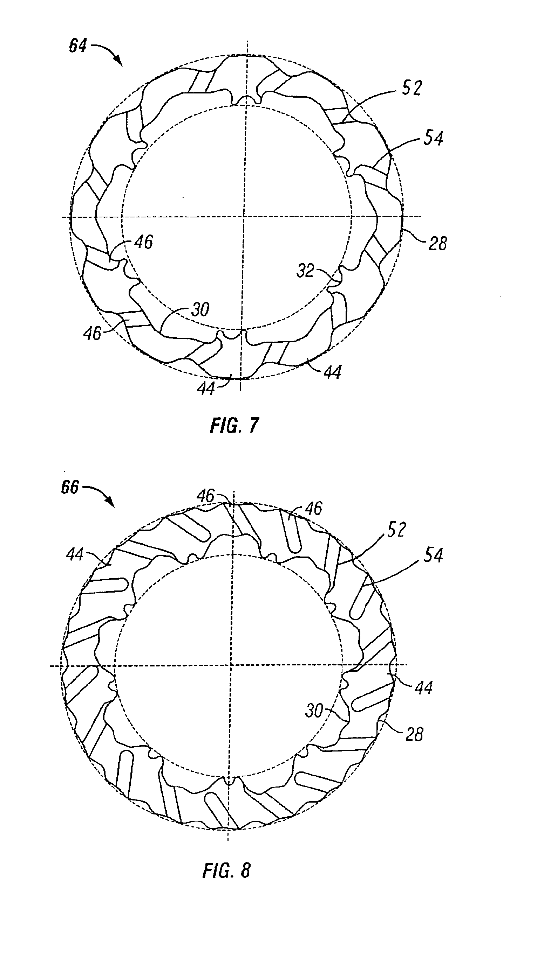

Fig. 6 illustrates a second alternate embodiment of the invention which is designated as 62. This embodiment includes irregularly shaped protruding segments 44 and has certain of the indented segments 46 truncating before reaching the inner rim 30. Further, the leading edges 52 and trailing edges 54 are less regularly shaped than in the preceding embodiments and are angled with respect to the brake pads.

Fig. 7 illustrates a third alternate embodiment of the invention which is designated as 64. This embodiment includes very irregularly shaped protruding segments 44 and indented segments 46. The leading edges 52 and trailing edges 54 are also significantly angled with respect to the brake pads 22.

Fig. 8 illustrates a fourth alternate embodiment of the invention which is designated as 66. In this version the protruding segments 44 are somewhat irregular and the indented segments 46 do not all pass through to the inner rim 30. Further, the leading edges 52 and trailing edges 54, while regular, are severely angled, and in a different orientation than those of the other embodiments shown.

The preferred brake disks 10, 60, 62, 64 and 66 of the present invention are constructed of AISI stainless steel but may also be made of various other materials, such as other types of steel, cast iron, light alloys, titanium, other structural metals and ceramics. The axial thickness of the disk is typically from 1 to 19 mm at the minimal thickness portions 56 and from 2 to 20 mm at the maximal thickness portions 58. However, this can differ depending on the proposed usage and type of brake mechanism with which the disk 10 is intended to be used. Further the typical diameter of a disk is about 160 to 600 mm, with the axial separation between the outer rim 28 and the inner rim 30 being about 15 to 100 mm. However, all materials and dimensions may vary depending on the use and brake mechanism involved.

The particular arrangement of protruding segments 44 and indented segments 46 may vary depending on the usage desired, with heavy duty uses having wider indented segments 46 to maximize cooling. Further the shapes of the protruding segments may vary depending on a variety of circumstances. The location of the bolts 34 on the particular hub 14 will define where bolt notches 32 are situated.

Although the preferred disk 10 described above is constructed of AISI stainless steel it is understood that various other materials may be developed or utilized with similar results. Similarly, the precise shapes and dimensions described above are subject to variation, without departing from the sprit and scope of the invention. Further, while various embodiments have been described above, it should be understood that these have been presented by way of example only, and not as limitation. Accordingly, the appended claims are to be interpreted as encompassing the entire spirit and scope of the invention and not merely the embodiments described and depicted herein.

The present invention is adapted for use in conjunction with conventional disk brake systems, particularly those used on motorcycles. The inventive brake disk 10 is especially adapted for use on racing and performance cycles where particular stress is placed on the brake disks. This stress may be both physical and thermal. Therefore, the improved braking characteristics provided by engagement of the brake pads 22 with the leading edges 52 of protruding segments improve braking in use while the improved cooling and heat dissipation provided by the indented segments 46 keep the brake systems working effectively for longer periods of time during use and extend the lifetime of the components. In addition, the lighter overall construction of the inventive brake disks 10 provide an advantage on performance vehicles where every gram of weight can be important.

For the above reasons, and others, the inventive brake disks according to the present invention are expected to have industrial applicability and commercial utility which are both significant and long lasting.

## Claims

1. A brake disk for use with a disk brake system having brake pads for axially engaging the disk, comprising a disk member axially arrayed about a central axis and having an outer rim and an inner rim, and an obverse face and a reverse face arrayed about a disk plane, **characterized in that** each said obverse face and reverse face is provided with circumferentially alternating protruding segments and indented segments, said protruding segments being adapted for physically engaging the brake pads.

2. A brake disk according to claim 1, **characterized in that** each said protruding segment includes a leading edge for gripping the brake pad upon engagement.

3. A brake disk according to claim 2, **characterized in that** each said leading edge has an angle of incidence with the brake pad in the range between +45° and -45°.

4. A brake disk according to claim 1, **characterized in that** each said indented segment is open to said outer rim and said inner rim such that air flow is facilitated therethrough.

5. A brake disk according to claim 1, **characterized in that** each of said outer rim and said inner rim is scalloped in shape to provide increased surface area for heat dissipation.

6. A brake disk according to claim 1, **characterized in that** each said protruding segment is circumferentially wider than the adjacent indented segments.

7. A brake disk according to claim 6, **characterized in that** the circumferential width ration of said indented segments to said protruding segments is in the range of 10% to 40%.

8. In a disk braking system for use in transrotary motion applications, including brake pads for engaging the surface of a brake disk, the improvement being **characterized by** providing the brake pad engaging surface of the brake disk with alternating protruding segments for engaging the brake pads and indented segments for facilitating cooling.

9. The improvement of claim 8, wherein each said protruding segment is circumferentially wider than the adjacent ones of said indented segments.

10. The improvement of claim 9, wherein each said indented segment has circumferentially width of less than 40% of that of said protruding segments.

11. The improvement of claim 8, and further including an irregularly shaped outer rim and an irregularly shaped inner rim such that expanded surface area is provided to aid heat dissipation therefrom.

12. The improvement of claim 8, and further providing that the opposing axial surfaces of the disk both include alternating protruding segments and indented segments and the indented segments on one surface are situated axially opposite protruding segments on the opposing surface.

13. The improvement of claim 8, wherein each said protruding segment is circumferentially wider than the adjacent ones of said indented segments.

14. The improvement of claim 8, wherein each said protruding segment has a leading edge for engaging with and gripping the surface of the brake pad.

15. The improvement of claim 14, wherein each said leading edge is adapted to engage the brake pad at a radial angle of less than 45 degrees.
